# EUROPÄISCHE PATENTSCHRIFT

(11) **EP 1 107 385 B1**
(45) Veröffentlichungstag und Bekanntmachung des Hinweises auf die Patenterteilung: **09.11.2011**
(21) Anmeldenummer: 00126136.1
(22) Anmeldetag: 30.11.2000
(51) Int. Cl.: H01R 13/627

(54) **Elektrischer und/oder optischer Steckverbinder mit einem Rastarm**
Electrical and/or optical plug-connector with locking arm
Connecteur électrique et/ou optique à douille ayant un bras d'arrêt

(30) Priorität: 30.11.1999 EP 99123724
(43) Veröffentlichungstag der Anmeldung: 13.06.2001
(73) Patentinhaber: Tyco Electronics AMP GmbH, 64625 Bensheim (DE)
(72) Erfinder: Gimbel, Markus, 85139 Wettstetten (DE)
(74) Vertreter: Patentanwaltskanzlei WILHELM & BECK

(56) Entgegenhaltungen:
- FR-A- 2 669 897
- GB-A- 2 159 345
- GB-A- 2 195 501

## Beschreibung

Die Erfindung betrifft einen elektrischen und/oder optischen Steckverbinder mit einem Gehäuse zur Aufnahme elektrischer oder optischer Kontakte, das zumindest einen Rastarm aufweist.

Aus der US 3,409,858 ist ein elektrischer Steckverbinder bekannt mit einem Gehäuse und einem daran vorgesehenen Rastarm. Der Rastarm weist einen Rastvorsprung auf und verrastet in einer Rastöffnung eines Gehäuses eines komplementären elektrischen Steckverbinders. Auf der dem Rastarm gegenüberliegenden Seite des Gehäuses weist der elektrische Steckverbinder ausserdem eine abgeschrägte Erhebung auf, die mit einer entsprechenden Öffnung im komplementären Steckverbinder zusammen wirkt und dazu geeignet ist, das Spiel, das zwischen den beiden komplementären Steckverbindern auch dann besteht, wenn sie miteinander verrastet sind, zu minimieren. Durch diese Anordnung wird jedoch nicht erreicht, dass die beiden Steckverbinder aufgrund einer Krafteinwirkung gegeneinander geschoben werden.

Aus der US 4,010,998 ist ein weiterer elektrischer Steckverbinder mit einem Gehäuse zur Aufnahme elektrischer Kontakte und einem Rastarm gezeigt. Der Rastarm weist dabei eine Längsöffnung auf, um die entsprechende Rastnase darin aufzunehmen. Die beiden Teilarme sind aber weiterhin an ihrem freien Ende steif miteinander verbunden.

Aus FR-A-2 669 897 A1 ist ein Gehäuse mit zwei Hälften bekannt, bei dem zwei Teilarme vorgesehen sind, die spiegelsymmetrisch zueinander ausgebildet sind und zur Verrastung mit dem zweiten Gehäuse dienen.

Aus GB-A-2 195 501 A ist ein elektrischer Steckverbinder bekannt, der zwei Gehäusehälften aufweist. An einer Gehäusehälfte sind an gegenüberliegenden Seiten jeweils ein längs geteilter Rastarm mit zwei Teilarmen vorgesehen. Die zwei Teilarme sind in Bezug auf eine Mittenachse des Rastarmes symmetrisch ausgebildet. Die zwei Teilarme weisen symmetrisch angeordnete Verrastungskanten und geneigt angeordnete Gleitflächen auf, die spiegelsymmetrisch zur Mittenachse angeordnet sind.

Aus GB-A-2 159 345 A1 ist ein gattungsgemäßer Steckverbinder bekannt, der ein Gehäuse mit einem Rasterarm mit zwei unabhängig voneinander beweglichen Teilarmen aufweist. Die Teilarme weisen Rastnasen auf, die spiegelsymmetrisch zu einer Mittenachse angeordnet sind.

Es ist Aufgabe der Erfindung, einen elektrischen und/oder optischen Steckverbinder mit einem Gehäuse zur Aufnahme elektrischer oder optischer Kontakte und einem Rastarm

### Hilfsantrag

anzugeben, mit dem eine sichere Verrastung und eine Minimierung des Spiels erreichbar ist.

Die Aufgabe wird gelöst durch eine Anordnung mit den Merkmalen des Patentanspruches 1.

Vorteilhafte Weiterbildungen sind in den Unteransprüchen angegeben.

Es wird ein Steckverbinder mit einem Gehäuse angegeben, das zur Aufnahme elektrischer und/oder optischer Kontakte ausgebildet ist. Das Gehäuse weist zumindest einen Rastarm auf. Der Rastarm ist von seinem freien Ende her längsgeteilt in zwei unabhängig voneinander bewegliche Teilarme. Jeder der Teilarme trägt einen Rastvorsprung.

Der erste Rastvorsprung, der sich am ersten Teilarm befindet, ist in der Längsausdehnung in Längsrichtung des ersten Teilarms kleiner als der zweite Rastvorsprung ausgebildet.

Aufgrund der unterschiedlichen Ausbildung der beiden Rastvorsprünge ist es möglich mit den beiden Teilarmen unterschiedliche Funktionen zu erfüllen. Einer der beiden Rastvorsprünge ist derart ausgebildet, dass damit eine sichere Verrastung mit einem ersten Spiel erfolgt. Eine solche Verrastung kann aber noch ein erhebliches Spiel zwischen den beiden komplementären Steckverbindern ermöglichen. Zum Ausgleich dieses Spiels wird nun der zweite bewegliche Teilarm eingesetzt. Dazu weist beispielsweise der entsprechende

Rastvorsprung eine schräge Ebene auf, die mit der Rastöffnung des komplementären Steckverbinders zusammenwirkt.

Es ist von besonderem Vorteil, dass die beiden Teilarme gleichzeitig entriegelt werden können. Dies wird dadurch erreicht, dass einer der Teilarme an seinem freien Ende eine Entriegelungstaste aufweist, mit der auch der zweite Teilarm zur Entriegelung betätigt wird.

Es ist von besonderem Vorteil, dass die beiden Teilarme mit der Entriegelungstaste einfach herstellbar sind. Dies wird dadurch erreicht, dass die Entriegelungstaste als Querbalken am freien Ende des einen Teilarmes ausgebildet ist und über das freie Ende des zweiten Armes hinausragt.

Es ist weiter von besonderem Vorteil, dass eine Reduzierung des Spiels zwischen den komplementären Steckverbindern ermöglicht wird. Dies wird dadurch erreicht, dass am Rastvorsprung des zweiten Teilarmes eine schräge Ebene oder eine Wölbung vorgesehen ist, die mit einer Wandung der Rastöffnung des komplementären Steckverbinders zusammen wirkt. Durch diese besondere Anordnung wird erreicht, dass aufgrund der Federwirkung des zweiten Teilarmes die beiden komplementären Steckverbinder nahezu spielfrei in einer Position, in der ihre Stirnflächen möglichst nahe beieinander sind, gehalten werden.

Die erfindungsgemässe Anordnung mit einem längs geteilten Rastarm kann sowohl bei elektrischen als auch bei optischen oder hybriden Steckverbindern eingesetzt werden. Sie ist nicht darauf beschränkt, dass sie sich an einem einteiligen Steckverbinder befindet, sondern kann auch beispielsweise an einem Umgehäuse vorgesehen sein, das beispielsweise weitere modulare Gehäuse mit den Kontaktkammern aufnimmt.

Ein Ausführungsbeispiel der Erfindung soll nun anhand der Zeichnungen erläutert werden.
Figur 1 zeigt eine erfindungsgemässe optische Steckeranordnung in einer perspektivischen Explosionsdarstellung.

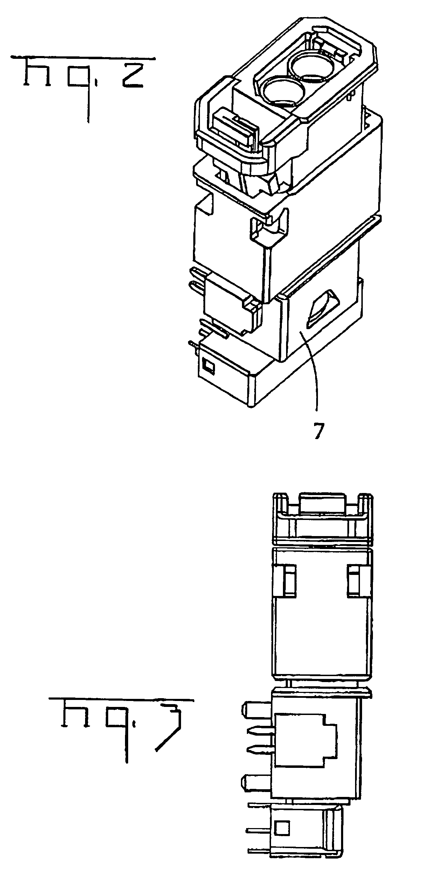

Figur 2 zeigt die optische Steckeranordnung nach Figur 1 in perspektivischer Seitenansicht im noch nicht gesteckten Zustand.
Figur 3 zeigt eine Seitenansicht der optischen Steckeranordnung nach Figur 1 im vollständig gesteckten Zustand.
Figur 4 zeigt eine perspektivische Ansicht der optischen Steckeranordnung im nicht verrasteten Zustand.
Figur 5 zeigt eine Aufsicht auf das kabelseitige Ende der optischen Steckeranordnung.
Figur 6 zeigt eine perspektivische Ansicht der optischen Steckeranordnung im vollständig gesteckten Zustand.
Figur 7 zeigt eine weitere perspektivische Seitenansicht der optischen Steckeranordnung im vollständig gesteckten Zustand.
Figur 8 zeigt eine teilgeschnittene Seitenansicht der optischen Steckeranordnung im vollständig gesteckten Zustand mit einem Schnitt entlang der Linie A gemäss Figur 5.
Figur 9 zeigt einen Querschnitt durch die vollständig gesteckte optische Steckeranordnung entlang der Linie B gemäss Figur 5.

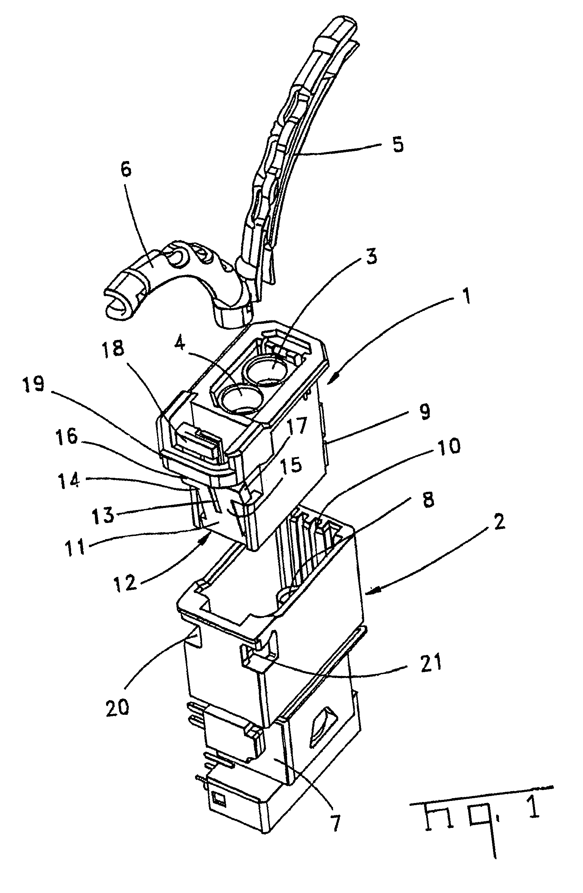

In Figur 1 ist eine optische Steckeranordnung in Explosionsdarstellung gezeigt. Die Steckeranordnung besteht aus einem ersten Gehäuse 1 eines ersten Steckverbinders und einem zweiten Gehäuse 2 eines zweiten komplementären Steckverbinders. Das erste Gehäuse 1 weist zwei Aufnahmekammern 3 auf, die zur Aufnahme optischer Kontakte dienen. Als optische Kontakte sind hier Hülsen bezeichnet, die auf Lichtwellenleiterenden aufgebracht sind und in die Aufnahmekammern 3 und 4 einbringbar sind. Weiter sind in Figur 1 zwei Zugentlastungshülsen 5 und 6 dargestellt, die auf die Lichtwellenleiter aufbringbar sind und dazu dienen, dass der minimale Biegeradius nicht unterschritten wird.

Der zweite komplementäre Steckverbinder mit dem Gehäuse 2 ist mit einem optoelektrischen Modul 7 verbunden und kann auf eine Leiterplatte aufgebracht werden. Er weist Aufnahmekammern 8 für komplementäre optische Kontakte auf.

Das zweite Gehäuse 2 ist in Form einer Wanne ausgebildet zur Aufnahme des ersten Gehäuses 1. Am ersten Gehäuse 1 können auf einer Seite Codierrippen 9 vorgesehen sein, die in entsprechende Vertiefungen 10 im wannenförmigen zweiten Gehäuse einbringbar sind.

Auf eine Seite weist das erste Gehäuse 1 einen Rastarm 11 auf. Der Rastarm 11 ist zum stirnseitigen Ende 12 des Gehäuses 1 hin am Gehäuse angebunden. Durch einen Schlitz 13 ist der Rastarm 11 zweigeteilt in zwei Teilarme 14 und 15. Die beiden Teilarme 14,15 weisen jeweils ein freies Ende auf und sind unabhängig voneinander bewegbar. Jeder der beiden Teilarme 14,15 weist einen Rastvorsprung 16,17 auf. Die Rastvorsprünge 15,17 sind unterschiedlich ausgebildet.

Am freien Ende des Teilarmes 14 ist ausserdem eine Entriegelungstaste 18 vorgesehen. Die Entriegelungstaste 18 ist als Querbalken ausgebildet und in ihrer Quererstreckung derart gewählt, dass sie über das freie Ende des zweiten Teilarmes 15 hinausragt. Die Entriegelungstaste 18 wird betätigt indem sie gegen das Gehäuse 1 gedrückt wird. Da sie sich in ihrer Quererstreckung über das freie Ende des zweiten Teilarmes 15 hinauserstreckt, wird durch Betätigung der Entriegelungstaste 18 nicht nur der erste Teilarm 14, sondern auch der zweite Teilarm 15 betätigt.

Zwischen den Rastvorsprüngen 16 und 17 und der Entriegelungstaste 18 befindet sich ein am Gehäuse 1 angebundener U-förmiger Bügel 19, der sowohl einen Transportschutz als auch eine Sicherung gegen Überdehnung des Rastarmes 11 darstellt.

Das zweite Gehäuse 2 weist auf einer Seite zwei Rastöffnungen 20 und 21 auf. Diese Rastöffnungen sind zur Aufnahme der Rastvorsprünge 16,17 der beiden Teilarme 14,15 des Rastarmes 11 des ersten Gehäuses 1 ausgebildet. Die beiden Rastöffnungen 20,21 sind jeweils an den Eckbereichen einer Seitenwand angeordnet. Dadurch können sie mit den seitlich an den Teilarmen 14,15 angeordneten Rastvorsprüngen 16,17 zusammenwirken.

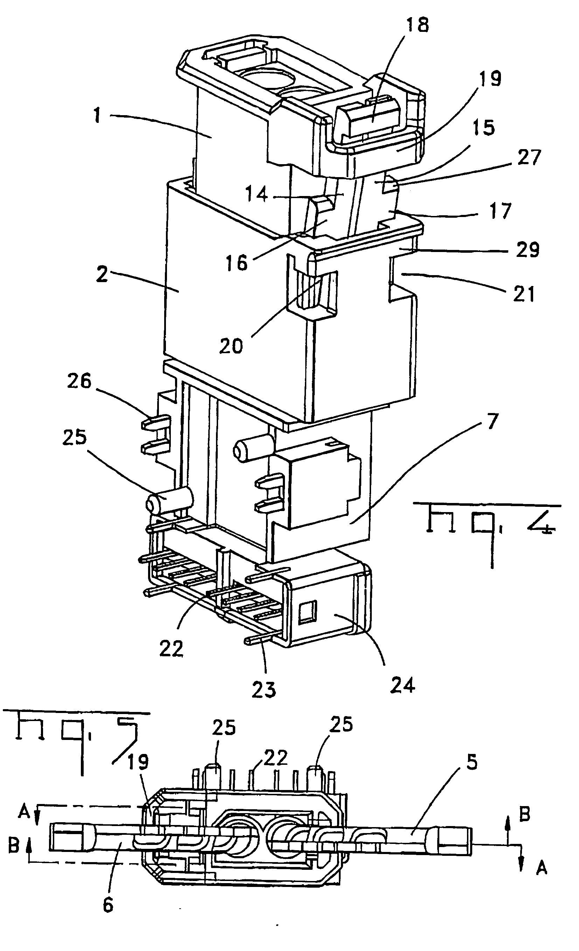

In Figur 4 ist die optische Steckverbinderanordnung im noch nicht vollständig gesteckten Zustand dargestellt. Auch hier ist nur das erste Gehäuse 1 bezw. zweite Gehäuse 2 dargestellt. Das erste Gehäuse 1 ist noch nicht entsprechend mit optischen Kontakten bestückt. Im wannenförmigen Bereich des Gehäuses 2 befinden sich die beiden Rastöffnungen 20 und 21. Sich anschliessend an den wannenfömigen Bereich befindet sich das optische Modul 7. Dieses weist Kontakte 22, Erdungskontakte 23 eines Schirmungsbleches 24, Positionierungshilfen 25 und weitere Kontakte 26 zum Aufbringen auf eine Leiterplatte auf.

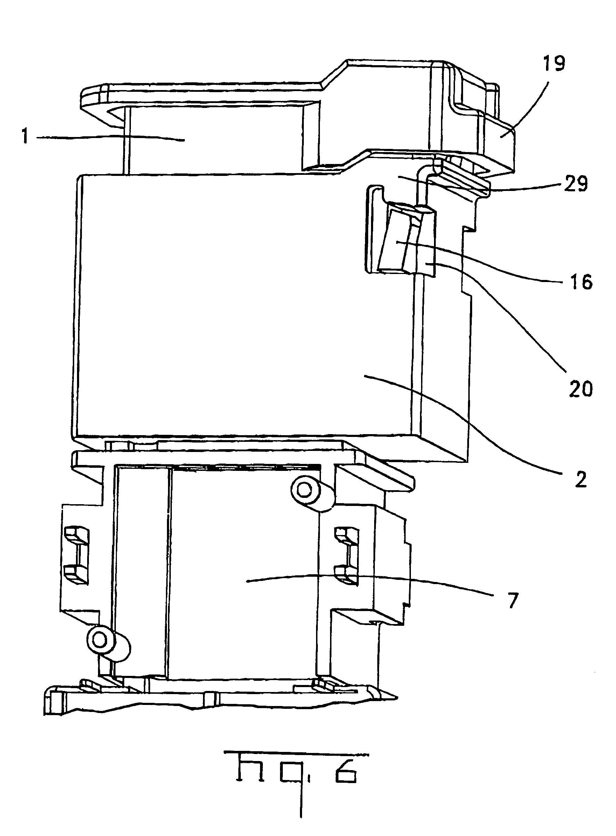

Die unterschiedliche Ausbildung der beiden Rastvorsprünge 16 und 17 der beiden Teilarme 15 und 14 wird nun erläutert. Der Rastvorsprung 16, der sich am ersten Teilarm 14 mit der Entriegelungstaste 18 befindet, ist in seiner Längsausdehnung in der Längsrichtung des Teilarmes 14 kleiner als der Rastvorsprung 17. Dadurch wird gewährleistet, dass der Teilarm 14 sicher in der Öffnung 20 verrastet. Dies ist in Figur 6 dargestellt. Die Öffnung 20 ist von ihrer Grösse derart ausgebildet, dass der Rastvorsprung 16 Spiel in der Rastöffnung 20 hat. Eine sichere Verrastung der beiden Steckergehäuse 1 und 2 jedoch mit einem relativ grossen Spiel ist gewährleistet, wenn der Rastvorsprung 16 in der Rastöffnung 20 verrastet ist.

Der grössere Rastvorsprung 17 weist an seinem kabelseitigen Ende eine Krümmung oder Wölbung 27 auf. Ausserdem weist die Rastöffnung 21 eine zur Steckrichtung S geneigte Wandung 28 auf, die mit der Krümmung 27 des zweiten Rastvorsprunges 17 des zweiten Teilarmes 15 zusammenwirkt. Wenn der erste Rastvorsprung 16 bereits in der Rastöffnung 20 verrastet ist, dient der zweite Rastarm 15 mit dem Rastvorsprung 17 zur Verringerung des Spiels zwischen den beiden Gehäusen 1 und 2. Dies wird dadurch erreicht, dass der Rastvorsprung 17 mit der Wölbung 27 am kabelseitigen Ende mit der schrägen Ebene 28 an der Rastöffnung 21 zusammenwirkt. Aufgrund der Federkräfte des Rastarmes 15, der eine Krafteinwirkung in der Steckrichtung aufgrund der entsprechenden Schrägen bedingt, wird das Spiel minimiert.

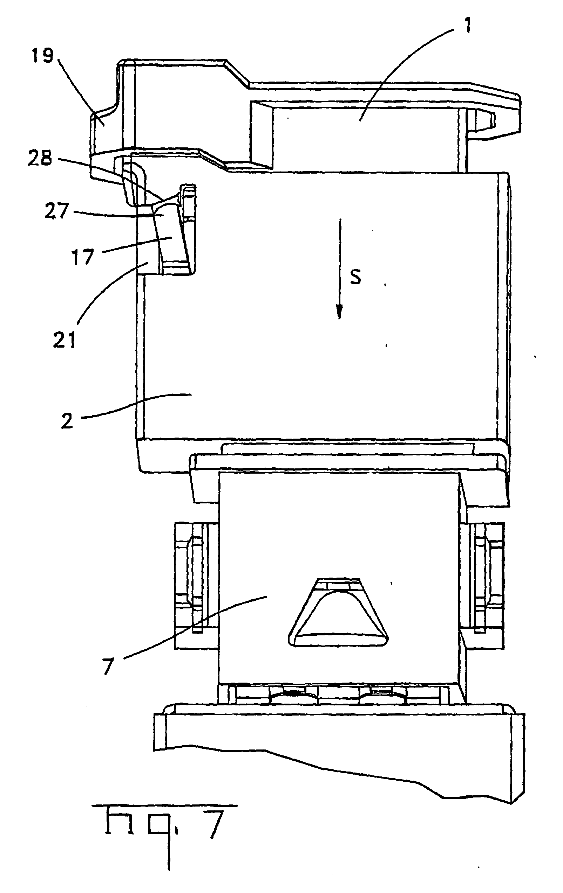

In den Figuren 6 und 7 ist einmal eine Seitenansicht mit dem verrasteten ersten Teilarm 14 bezw. eine Seitenansicht mit dem verrasteten Teilarm 15 dargestellt. Aufgrund des geteilten Rastarmes 11 ist eine unabhängige Verrastung der beiden Teilarme möglich. Die beiden Teilarme dienen zudem als Kraftspeicher, der ein sicheres Stecken ermöglicht und Halbsteckungen verhindert. Dies ist aufgrund der besonderen Ausbildung des Kragens 29 des zweiten Gehäuses 2 ermöglicht.

Es ist von besonderem Vorteil, dass die Verrastung der beiden Teilarme 15,14 durch Betätigung der Entriegelungstaste 18 miteinander entrastet werden kann, obwohl die beiden Arme unabhängig voneinander verrasten.

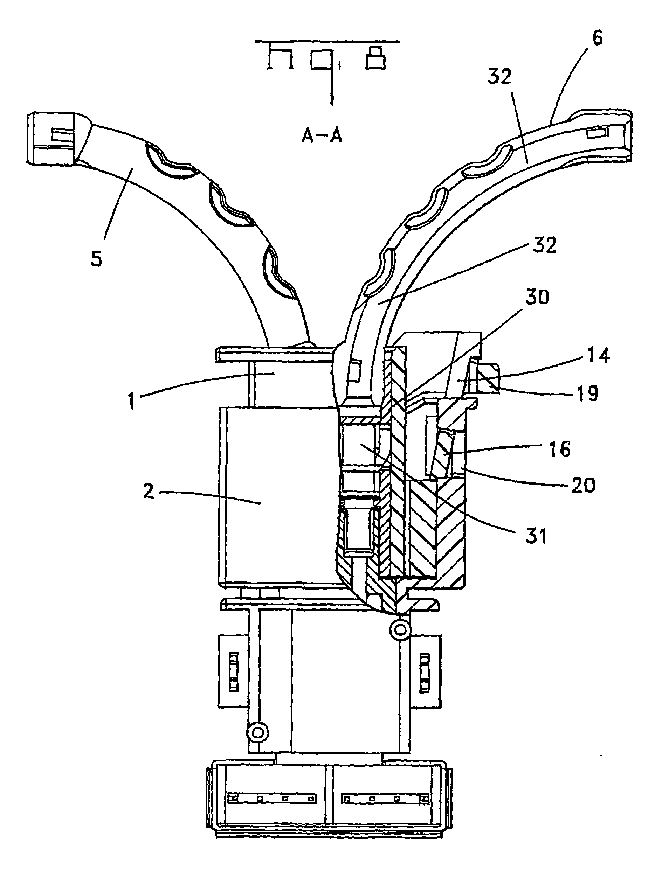

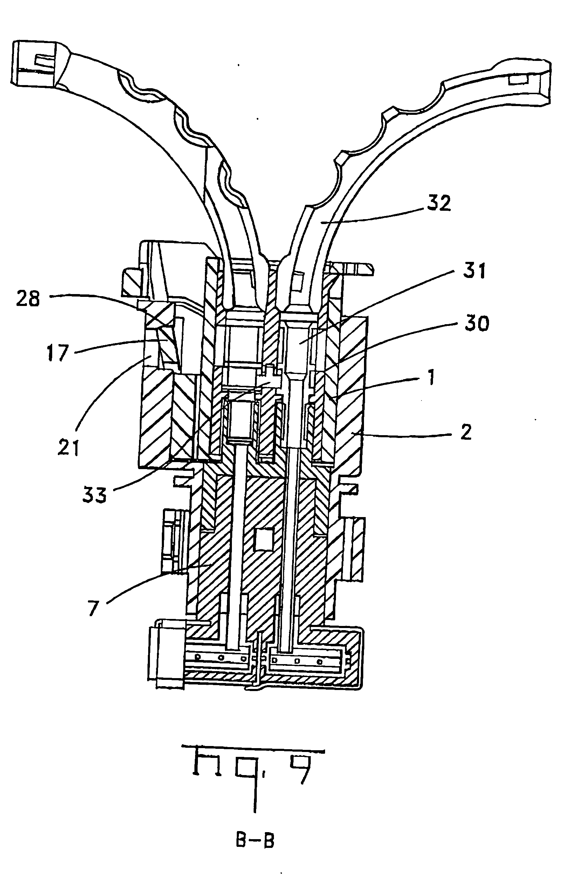

In den Figuren 8 und 9 ist nun jeweils eine vollständig verrastete Steckeranordnung im Querschnitt gezeigt, wobei der Querschnitt einmal durch den ersten Rastvorsprung 16 des ersten Teilarmes 14 und einmal durch den zweiten Rastvorsprung 17 des zweiten Teilarmes 15 gelegt ist. Die Darstellung wie in den Figuren 8 und 9 gezeigt weist auch entsprechende optische Kontakte und optische Lichtwellenleiter auf.

Figur 8 zeigt einen Teilschnitt durch den vollständig gesteckten Steckverbinder, wobei der Schnitt durch den Rastvorsprung 16 gelegt ist, wie in Figur 5 durch die Schnittlinie A-A dargestellt. Der Rastvorsprung 16 verrastet in der Rastöffnung 20. Im ersten Gehäuse 1 befindet sich ausserdem ein Kammergehäuse 30, in das wiederum die optischen Kontakte 31 in Form von Hülsen mit den optischen Adern 32 einbringbar sind.

In Figur 8 ist deutlich zu erkennen, dass der Rastvorsprung 16 Spiel in der Öffnung 20 hat. Im Gegensatz dazu wirkt der Rastvorsprung 17 mit der schrägen Wandung 28 der Rastöffnung 21 zusammen. Der erste Steckverbinder besteht aus dem ersten Gehäuse 1, das als Umgehäuse ausgebildet ist, dem Kammergehäuse 30 mit den optischen Kontakten 31, die durch eine Kontaktsicherung 33 im Kammergehäuse 30 gehalten sind und in die die optischen Fasern eingebracht sind.

## Patentansprüche

1. Elektrischer und/oder optischer Steckverbinder mit einem Gehäuse (1) zur Aufnahme elektrischer oder optischer Kontakte, das zumindest einen Rastarm (11) aufweist, wobei der Rastarm (11) längsgeteilt ist in zwei unabhängig voneinander bewegliche Teilarme (14,15 )und dass jeder der Teilarme (14,15) einen Rastvorsprung (16,17) aufweist, die unterschiedlich ausgebildet sind, **dadurch gekennzeichnet, dass** der erste Rastvorsprung (16), der sich am ersten Teilarm (14) befindet in seiner Längsausdehnung in einer Längsrichtung des ersten Teilarms (14) kleiner als der zweite Rastvorsprung (17) ausgebildet ist.

2. Elektrischer und/oder optischer Steckverbinder nach Anspruch 1, **dadurch gekennzeichnet, dass** einer der Teilarme (14) an seinem freien Ende eine Entriegelungstaste (18) aufweist, durch deren Betätigung auch der zweite Teilarm (15) entriegelt wird.

3. Elektrischer und/oder optischer Steckverbinder nach Anspruch 2, **dadurch gekennzeichnet, dass** die Entriegelungstaste (18) als Querbalken ausgebildet ist und bei Betätigung am freien Ende des zweiten Teilarms (15) angreift.

4. Elektrischer und/oder optischer Steckverbinder nach Anspruch 1, **dadurch gekennzeichnet, dass** die Rastvorsprünge (16,17) der beiden Teilarme (14,15) gegeneinander versetzt angeordnet sind.

5. Elektrischer und/oder optischer Steckverbinder nach Anspruch 1, **dadurch gekennzeichnet, dass** der Rastvorsprung (16) am ersten Teilarm (14) derart ausgebildet ist, dass er eine sichere Verrastung ermöglicht.

6. Elektrischer und/oder optischer Steckverbinder nach Anspruch 1, **dadurch gekennzeichnet, dass** der Rastvorsprung (17) am zweiten Teilarm (15) eine schräge Ebene (27) aufweist, derart, dass er eine Reduzierung des Spiels im verrasteten Zustand ermöglicht.

7. Elektrischer und/oder optischer Steckverbinder nach Anspruch 1, **dadurch gekennzeichnet, dass** der erste Teilarm (14) an seinem freien Ende eine Entriegelungstaste (18) aufweist, durch deren Betätigung auch der zweite Teilarm (15) entriegelt wird und, dass der Rastvorsprung (16) am ersten Teilarm (14) derart ausgebildet ist, dass er eine sichere Verrastung ermöglicht.

8. Elektrischer und/oder optischer Steckverbinder nach Anspruch 1, **dadurch gekennzeichnet, dass** das Gehäuse ein Umgehäuse ist, und dass ein weiteres Gehäuse mit den Kontaktkammern in das Umgehäuse einbringbar ist.

9. Elektrische und/oder optische Steckeranordnung bestehend aus einem ersten Steckverbinder nach einem der Ansprüche 1-7 und einem zweiten komplementären Steckverbinder mit einem Gehäuse (2) zur Aufnahme komplementärer elektrischer oder optischer Kontakte, das zumindest eine Rastöffnung (20,21) zur Verrastung der Rastvorsprünge (16,17) aufweist.

## Claims

1. Electrical and/or optical plug connector comprising a case (1) for receiving electrical or optical contacts, which case comprises at least one locking arm (11), the locking arm (11) being divided longitudinally into two partial arms (14, 15) which are movable independently of one another, and each partial arm (14, 15) comprising a differently formed locking projection (16, 17), **characterised in that** the first locking projection (16), which is arranged on the first partial arm (14), is smaller in its longitudinal extension in a longitudinal direction of the first partial arm (14) than the second locking projection (17).

2. Electrical and/or optical plug connector according to claim 1, **characterised in that** one of the partial arms (14) comprises on its free end an unlock button (18), the operation of which button also unlocks the second partial arm (15).

3. Electrical and/or optical plug connector according to claim 2, **characterised in that** the unlock button (18) is formed as a transverse bar and when operated acts on the free end of the second partial arm (15).

4. Electrical and/or optical plug connector according to claim 1, **characterised in that** the locking projections (16, 17) of the two partial arms (14, 15) are arranged offset from one another.

5. Electrical and/or optical plug connector according to claim 1, **characterised in that** the locking projection (16) on the first partial arm (14) is formed in such a way that it enables secure locking.

6. Electrical and/or optical plug connector according to claim 1, **characterised in that** the locking projection (17) on the second partial arm (15) comprises an oblique plane (27), in such a way that it enables a reduction of the clearance in the locked state.

7. Electrical and/or optical plug connector according to claim 1, **characterised in that** the first partial arm (14) comprises on its free end an unlock button (18), the operation of which button also unlocks the second partial arm (15), and **in that** the locking projection (16) on the first partial arm (14) is formed in such a way that it enables secure locking.

8. Electrical and/or optical plug connector according to claim 1, **characterised in that** the case is a housing, and **in that** a further case comprising the contact chambers can be introduced into the housing.

9. Electrical and/or optical plug arrangement consisting of a first plug connector according to any one of claims 1 to 7 and a second complementary plug connector comprising a case (2) for receiving complementary electrical or optical contacts, which case comprises at least one locking opening (20, 21) for locking the locking projections (16, 17).

## Revendications

1. Connecteur électrique et/ou optique comprenant un boîtier (1) pour la réception de contacts électriques ou optiques qui comprend au moins un bras d'arrêt (11), le bras d'arrêt (11) étant divisé dans le sens de la longueur en deux bras partiels (14, 15) mobiles indépendamment l'un de l'autre et chacun des bras partiels (14, 15) étant pourvu d'une saillie d'arrêt (16, 17), lesquelles saillies sont d'exécution différente, **caractérisé par le fait que** la première saillie d'arrêt (16), située sur le premier bras partiel (14), est exécutée de manière à avoir une étendue longitudinale, dans une direction longitudinale du premier bras partiel (14), moins importante que la seconde saillie d'arrêt (17).

2. Connecteur électrique et/ou optique selon la revendication 1, **caractérisé par le fait qu'**un des bras partiels (14) est pourvu, à son extrémité libre, d'une touche de déverrouillage (18) dont l'actionnement permet de déverrouiller aussi le second bras partiel (15).

3. Connecteur électrique et/ou optique selon la revendication 2, **caractérisé par le fait que** la touche de déverrouillage (18) est exécutée en tant que barre transversale et s'enclenche avec l'extrémité libre du second bras partiel (15) lors de son actionnement.

4. Connecteur électrique et/ou optique selon la revendication 1, **caractérisé par le fait que** les saillies d'arrêt (16, 17) des deux bras partiels (14, 15) ont une position décalée l'une par rapport à l'autre.

5. Connecteur électrique et/ou optique selon la revendication 1, **caractérisé par le fait que** la saillie d'arrêt (16) sur le premier bras partiel (14) est exécutée de manière à permettre un encliquetage sûr.

6. Connecteur électrique et/ou optique selon la revendication 1, **caractérisé par le fait que** la saillie d'arrêt (17) sur le second bras partiel (15) comporte un plan incliné (27) de manière à permettre une réduction du jeu dans l'état encliqueté.

7. Connecteur électrique et/ou optique selon la revendication 1, **caractérisé par le fait que** le premier bras partiel (14) est pourvu, à son extrémité libre, d'une touche de déverrouillage (18) dont l'actionnement permet de déverrouiller aussi le second bras partiel (15) et **par le fait que** la saillie d'arrêt (16) sur le premier bras partiel (14) est exécutée de manière à permettre un encliquetage sûr.

8. Connecteur électrique et/ou optique selon la revendication 1, **caractérisé par le fait que** le boîtier est un boîtier périphérique et **par le fait qu'**un autre boîtier avec les alvéoles de contact peut être introduit dans le boîtier périphérique.

9. Dispositif connecteur électrique et/ou optique formé d'un premier connecteur selon l'une des revendications 1-7 et d'un second connecteur complémentaire comprenant un boîtier (2) pour la réception de contacts électriques ou optiques complémentaires qui est pourvu d'une ouverture d'arrêt (20, 21) pour l'encliquetage des saillies d'arrêt (16, 17).
